# EUROPEAN PATENT APPLICATION

(11) **EP 4 589 681 A2**
(43) Date of publication of application: **23.07.2025**
(21) Application number: 25152053.2
(22) Date of filing: 15.01.2025
(51) Int. Cl.: H01M 4/136, H01M 4/58, H01M 10/052, H01M 50/105, H01M 50/124, H01M 50/533, H01M 50/586, H01M 50/595

(54) **ELECTRODE ASSEMBLY AND RECHARGEABLE BATTERY INCLUDING THE SAME**

(30) Priority: 15.01.2024 KR 20240006318
(71) Applicant: Samsung SDI Co., Ltd., Yongin-si, Gyeonggi-do 17084 (KR)
(72) Inventor: KIM, Kyung, Yongin-si 17084 (KR); LEE, Hayan, Yongin-si 17084 (KR); YOU, Jinmu, Yongin-si 17084 (KR); SEOK, Dohyeong, Yongin-si 17084 (KR); LEE, Sangheon, Yongin-si 17084 (KR)
(74) Representative: Marks & Clerk LLP

(57) **Abstract**

An electrode assembly include a first electrode; a separator; and a second electrode. The first electrode includes a first substrate, a first active material layer including a first front surface active material layer and a first rear surface active material layer respectively formed on a front surface and a rear surface of the first substrate, a functional layer formed on the rear surface of the first substrate, a first finishing tape covering an end portion of the rear surface first active material layer and one end portion of the functional layer, a second finishing tape covering an end portion of the first front surface active material layer, and a third finishing tape covering an end portion of the second finishing tape. Another end portion of the functional layer overlaps the third finishing tape.

## Description

### FIELD

The present disclosure relates to an electrode assembly, and more particularly, to an electrode assembly for a rechargeable battery and a rechargeable battery including the same.

### BACKGROUND

A rechargeable battery is an electric power storage system that may provide an excellent energy density and may convert electrical energy to chemical energy to store the converted chemical energy. The rechargeable battery is rechargeable compared with a primary battery that may not be recharged, so that it is widely used in an information technology (IT) device such as a smartphone, a notebook (or a laptop computer), a tablet PC, or the like.

An interest in electric vehicles has increased, the rechargeable battery is increasingly used as a battery in electric vehicles.

In a winding-type rechargeable battery, a short circuit may occur at an electrode uncoated portion disposed at an outermost position due to an impact when the rechargeable battery is used in an electric vehicle, for example.

### SUMMARY

One or more embodiments include providing an electrode assembly capable of preventing a short circuit at an outermost position of a winding-type electrode assembly when it is exposed to an impact or the like, and a rechargeable battery including the same.

A winding-type electrode assembly according to some embodiments includes: a first electrode; a separator; and a second electrode. The first electrode includes a first substrate, a first active material layer including a first front surface active material layer and a first rear surface active material layer respectively formed on a front surface and a rear surface of the first substrate, a functional layer formed on the rear surface of the first substrate, a first finishing tape covering an end portion of the rear surface first active material layer and one end portion of the functional layer, a second finishing tape covering an end portion of the first front surface active material layer, and a third finishing tape covering an end portion of the second finishing tape. Another end portion of the functional layer overlaps the third finishing tape.

The first substrate may include a first electrode active portion where the first active material layer is formed and a first electrode uncoated portion where the first active material layer is not formed so that the first substrate is exposed. The first electrode may further include a first electrode tab formed on the first substrate of the first electrode uncoated portion.

The first electrode may also include a fourth finishing tape formed on the first substrate between an end portion of the first substrate adjacent to the third finishing tape and the first electrode tab.

The winding-type electrode assembly may be wound and then pressurized to have an oval shape that includes a pair of flat portions and a pair of curved portions, and the fourth finishing tape may cover any one of the curved portions.

The first electrode may further include a protective tape formed on the first electrode tab and a fifth finishing tape covering the protective tape and an end portion of the first active material layer.

The functional layer may include a ceramic material.

The first electrode may further include a first functional layer disposed between the first front surface active material layer and the first substrate, and the functional layer may correspond to a second functional layer.

The first functional layer may include a material including a compound represented by Chemical Formula 1, a compound represented by Chemical Formula 2, or a combination thereof.

Chemical Formula 1 is given by Liₐ₁M¹ₓ₁Fe₍₁₋ₓ₁₎PO₄, where
0.90≤a1≤1.5, 0≤x1≤0.4, and M¹ may be Mg, Co, Ni, or a combination thereof.

Chemical Formula 2 is given by Liₐ₂Mnₓ₂Fe₍₁₋ₓ₂₎PO₄, where 0.90 ≤ a2 ≤1.5 and 0.1 ≤ x2 ≤1.

A rechargeable battery according to one or more embodiments includes: the electrode assembly according to one or more embodiments detailed herein; and a case that accommodates the electrode assembly and an electrolyte.

A method of manufacturing a winding-type electrode assembly according to one or more embodiments may include disposing a separator between a first electrode and a second electrode. The first electrode may include a first substrate, a first active material layer including a first front surface active material layer and a first rear surface active material layer respectively formed on a front surface and a rear surface of the first substrate, and a functional layer formed on the rear surface of the first substrate. The method may also include covering an end portion of the rear surface first active material layer and one end portion of the functional layer with a first finishing tape, covering an end portion of the first front surface active material layer with a second finishing tape, and covering an end portion of the second finishing tape with a third finishing tape. Another end portion of the functional layer may overlap the third finishing tape.

If a functional layer is attached to one surface and a finishing tape is attached to the other surface, according to some embodiments, an electrode assembly may prevent a short circuit at an outermost position even when an external impact occurs while maintaining an insulating characteristic, and a rechargeable battery including the same, may be provided.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic exploded perspective view of a rechargeable battery according to one or more embodiments.
FIG. 2 is a schematic transverse section view of an electrode assembly of FIG. 1 according to some embodiments.
FIG. 3 is a view for describing a first electrode corresponding to FIG. 2.
FIG. 4 is a view for describing a second electrode corresponding to FIG. 2.
FIG. 5 is a schematic cross-sectional view of an electrode assembly according to some embodiments.
FIG. 6 is a view for describing a first electrode corresponding to FIG. 5.

### DETAILED DESCRIPTION

Embodiments of the present disclosure will be described more fully hereinafter with reference to the accompanying drawings. As those skilled in the art would realize, the described embodiments may be modified in various different ways, all without departing from the disclosure or scope of the claims. The drawings and description are to be regarded as illustrative in nature and not restrictive.

For clarity, parts or portions that are irrelevant to the description of one or more embodiments are omitted, and identical or similar constituent elements are denoted by the same reference numerals. In addition, ordinal numbers such as "first", "second", "third", and the like in this specification are used to avoid confusion between constituent elements.

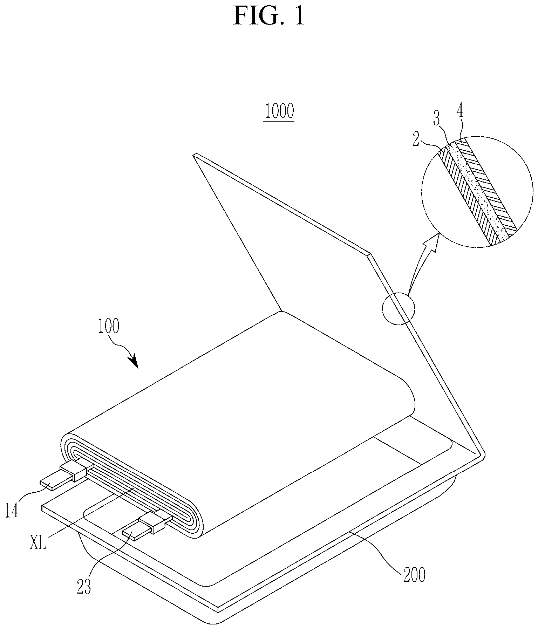

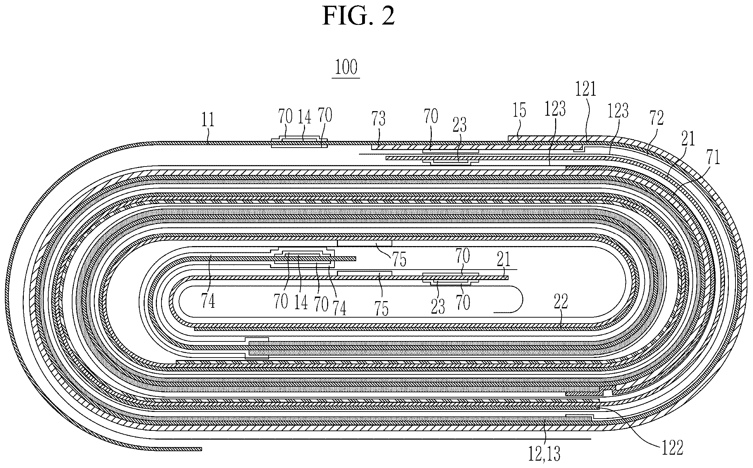

FIG. 1 is a schematic exploded perspective view of a rechargeable battery 1000 according to one or more embodiments, and FIG. 2 is a schematic transverse section view of the electrode assembly 100 according to some embodiments of FIG. 1.

As shown in FIG. 1, the rechargeable battery 1000 according to some embodiments may include the electrode assembly 100 and a pouch 200.

Referring to FIG. 1 and FIG. 2, the rechargeable battery 1000 may include a first electrode 121, a second electrode 122, and a separator 123 disposed between the first electrode 121 and the second electrode 122. The separator 123 may be used for insulation, and may be stacked in an order of the first electrode 121, the separator 123, the second electrode 122, and the separator 123.

The electrode assembly 100 may have a jelly roll shape wound around a winding axis XL in a state in which the first electrode 121, the separator 123, and the second electrode 122 are stacked. For example, the electrode assembly 100 may be wound and then may be pressed flat (as shown in FIG. 1), and a cross-section cut in a vertical direction across the winding axis XL may have an oval shape that is long in one direction (as shown in FIG. 2).

In some embodiments, if viewed in a cross-section, the electrode assembly 100 may include a relatively flat portion and a relatively round curved portion. The flat portion may be a portion pressed after the electrode assembly 100 is wound, and the curved portion may connect two flat portions facing each other. One rotation of the electrode assembly 100 may include a pair of flat portions facing each other and a pair of curved portions connected to an end portion of the flat portion.

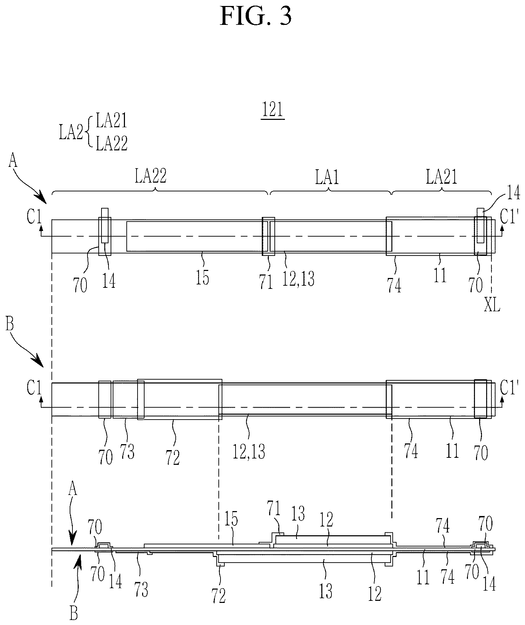

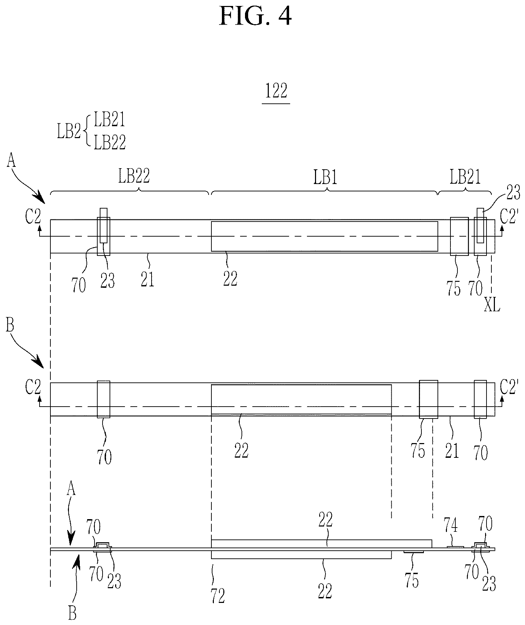

FIG. 3 is a view for describing a first electrode 121 corresponding to FIG. 2, and FIG. 4 is a view for describing a second electrode 122 corresponding to FIG. 2.

FIG. 3 is a view sequentially showing a front plan view, a rear plan view, and a cross-sectional view of the first electrode 121, and FIG. 4 is a view sequentially showing a front plan view, a rear plan view, and a cross-sectional view of the second electrode 122. FIG. 2 is a cross-sectional view cut along a line C1-C1' of the first electrode 121 (indicated in FIG. 3) and along a line C2-C2' of the second electrode 122 (indicated in FIG. 4).

Referring to FIGs. 2 to 4, the first electrode 121 may include a first electrode active portion LA1 and a pair of first electrode uncoated portions LA2 disposed at opposite sides of the first electrode active portion LA1. The second electrode 122 may include a second electrode active portion LB1 and a pair of second electrode uncoated portions LB2 disposed at an opposite side around the second electrode active portion LB1.

Hereinafter, when the first and second electrodes 121, 122 with band shapes are wound around the winding axis XL, an end portion adjacent to the winding axis XL may be referred to as a front end portion, and an end portion disposed relatively far from the winding axis XL may be referred to as a rear end portion.

Referring to FIG. 2 and FIG. 3, the first electrode active portion LA1 of the first electrode 121 may include a first substrate 11, a first functional layer 12 formed on at least one surface of the first substrate 11, and a first active material layer 13 formed on the first functional layer 12.

The first electrode uncoated portion LA2 may include a first front end electrode uncoated portion LA21 disposed at a front end portion of the first electrode 121 and a first rear end electrode uncoated portion LA22 disposed at a rear end portion of the first electrode 121. A separate active material layer may not be formed on the first substrate 11 of the first front end electrode uncoated portion LA21 and the first rear end electrode uncoated portion LA22 so that a surface of the first substrate 11 is exposed. A first electrode tab 14 for drawing an electric current to the outside may be connected on the first substrate 11 of the first electrode uncoated portion LA2 disposed at the front end portion and the rear end portion.

The first electrode tab 14 may be connected to the first electrode uncoated portion LA2 by an ultrasonic welding method, a laser welding method, or a resistance welding method, and may protrude out of the first electrode uncoated portion LA2. The first electrode tab 14 may include aluminum like the first substrate 11, and a thickness of the first electrode tab 14 may be 12 micrometers (µm) or less.

Hereinafter, a surface to which the first electrode tab 14 is attached may be referred to as a front surface A of the first substrate 11, and a surface opposite to the surface to which the first electrode tab 14 is attached may be referred to as a rear surface B of the first substrate 11. A protective tape 70 for protecting the first electrode tab 14 may be attached on the first electrode tab 14. Protective tapes 70 may be formed on both surfaces around the first substrate 11.

A second functional layer 15 made of a ceramic material may be formed on the front surface A of the first rear end electrode uncoated portion LA22. The second functional layer 15 may be disposed to be spaced apart from one end of the first active material layer 13 by a predetermined distance. The second functional layer 15 may be formed to have a length capable of winding around the electrode assembly 100 at least once, and may have an area of 10% to 30% with respect to an area of the first active material layer 13. The second functional layer 15 may prevent the battery from being short-circuited by an external impact.

The second functional layer 15 may include a ceramic and a binder. The ceramic may include an endothermic ceramic such as pseudoboehmite, boehmite, or the like; a general ceramic such as aluminum oxide (e.g., AlO₃,Al₂O₃, or the like), silicon dioxide (SiO₂), magnesium oxide (MgO), titanium dioxide (TiO₂), hafnium oxide (HfO₂), tin oxide (SnO), cerium (IV) oxide (CeO₂), nickel oxide (NiO), zinc oxide (ZnO), calcium oxide (CaO), zirconium oxide (ZrO₂), yttrium oxide (Y₂O₃), silicon carbide (SiC), or the like; or a combination thereof.

The general ceramic may be an insulating material with only an insulating characteristic, and the endothermic ceramic may be an endothermic material with an insulating characteristic and an endothermic characteristic.

The binder may include a non-water-soluble binder, a water-soluble binder, or a combination thereof. The binder may attach materials within a ceramic layer to each other, and may attach the ceramic layer on the first substrate 11.

The non-water-soluble binder may include polyvinyl chloride, carboxylated polyvinyl chloride, polyvinyl fluoride, a polymer including ethylene oxide, an ethylene-propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder or a polymer resin binder. The rubber-based binder may be selected from a styrene-butadiene rubber (SBR), an acrylated styrene-butadiene rubber, an acrylonitrile-butadiene rubber (ABR), an acryl rubber, a butyl rubber, a fluorine rubber, and a combination thereof. The polymer resin binder may be selected from polyethylene oxide, polyvinylpyrrolidone, polyepichlorohydrin, polyphosphazene, polyacrylonitrile, an ethylene-propylene-diene copolymer, polyvinylpyridine, chlorosulfonated polyethylene, latex, a polyester resin, an acrylic resin, a phenol resin, an epoxy resin, polyvinyl alcohol, and a combination thereof.

If the water-soluble binder is used as the binder, it may further include a cellulose-based compound capable of imparting viscosity. This cellulose-based compound may be used by mixing one or more types of carboxylmethyl cellulose, hydroxypropyl methyl cellulose, methyl cellulose, an alkali metal salt thereof, and the like. Na, K, or Li may be used as the alkali metal.

The first substrate 11 may provide a moving path of an electric charge generated in the first active material layer 13, and may support the first active material layer 13.

The first electrode 121 may be a positive electrode, and the first substrate 11 may be a metal thin plate that is conductive. For example, the first substrate 11 may be an aluminum foil, or may have a mesh structure.

The first functional layer 12 below the first active material layer 13 may include a material including a compound represented by Chemical Formula 1 below, a compound represented by Chemical Formula 2 below, or a combination thereof:

[Chemical Formula 1] Liₐ₁M¹ₓ₁Fe₍₁₋ₓ₁₎PO₄

In Chemical Formula 1, 0.90≤a1≤1.5, 0≤x1≤0.4, and M¹ may be Mg, Co, Ni, or a combination thereof, for example.

[Chemical Formula 2] Liₐ₂Mnₓ₂Fe₍₁₋ₓ₂₎PO₄

In Chemical Formula 2, 0.90 ≤ a2 ≤1.5 and 0.1≤ x2 ≤1, for example.

The compound represented by Chemical Formula 1 may be a lithium iron phosphate compound. In Chemical Formula 1, a mole fraction of lithium may be appropriately adjusted between approximately 0.9 and 1.5, and 0.90≤a1≤1.2, or 0.95≤a1≤1.1, for example. In Chemical Formula 1, M¹ may exist instead of Fe, and a mole fraction thereof may be 0≤x1≤0.7, 0≤x1≤0.5, 0≤x1≤0.3, 0≤x1≤0.1, or 0≤x1≤0.05.

The compound represented by Chemical Formula 2 may be a lithium manganese iron phosphate compound (lithium manganese iron phosphate). In Chemical Formula 2, a mole fraction of lithium may be 0.90≤a2≤1.2 or 0.95≤a2≤1.1, like Chemical Formula 1. In Chemical Formula 2, a mole fraction of manganese may be 0.2≤x2≤0.9, 0.3≤x2≤0.9, or 0.4≤x2≤0.8, and particularly if 0.5≤x2≤0.9, lithium ion conduction ability may be high.

For example, the first functional layer 12 may be lithium transition metal phosphate, and may include LiFePO₄, LiMn_{0.5}Fe_{0.5}PO₄, LiMnPO₄, or the like.

The first functional layer 12 may include the above material, and may further include a binder and/or a conductive material. Here, a content of the material may be 80 percent by weight (wt%) to 97 wt% with respect to an entire weight of the first functional layer 12. A content of the conductive material may be 0.5 wt% to 10 wt% with respect to the entire weight of the first functional layer 12, and the binder may be 1 wt% to 10 wt% with respect to the entire weight of the first functional layer 12. The binder may attach material particles within the first functional layer 12 to each other, and may attach the material particles to the first substrate 11. The binder may include a non-water-soluble binder, a water-soluble binder, or a combination thereof.

The non-water-soluble binder may include polyvinyl chloride, carboxylated polyvinyl chloride, polyvinyl fluoride, a polymer including ethylene oxide, an ethylene-propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder or a polymer resin binder. The rubber-based binder may be selected from a styrene-butadiene rubber (SBR), an acrylated styrene-butadiene rubber, an acrylonitrile-butadiene rubber (ABR), an acryl rubber, a butyl rubber, a fluorine rubber, and a combination thereof. The polymer resin binder may be selected from polyethylene oxide, polyvinylpyrrolidone, polyepichlorohydrin, polyphosphazene, polyacrylonitrile, an ethylene-propylene-diene copolymer, polyvinylpyridine, chlorosulfonated polyethylene, latex, a polyester resin, an acrylic resin, a phenol resin, an epoxy resin, polyvinyl alcohol, and a combination thereof.

If the water-soluble binder is used as the binder, it may further include a cellulose-based compound capable of imparting viscosity. This cellulose-based compound may be used by mixing one or more types of carboxylmethyl cellulose, hydroxypropyl methyl cellulose, methyl cellulose, an alkali metal salt thereof, and the like. Na, K, or Li may be used as the alkali metal.

The conductive material may be used to provide conductivity to the electrode, and the conductive material may include a carbon-based material, a metal-based material, a conductive polymer, or a mixture thereof.

The conductive material included in the first functional layer 12, which does not cause chemical change and is an electronic conductive material, may be used in the battery including the conductive material. For example, the conductive material may be a conductive material including a carbon-based material such as natural graphite, artificial graphite, carbon black, acetylene black, ketjen black, a carbon fiber, or the like; a metal-based material such as a metal powder or a metal fiber containing copper, nickel, aluminum, silver, or the like; a conductive polymer such as a polyphenylene derivative or the like; or a mixture thereof.

The first active material layer 13 may be formed by dispersing an electrode mixture (or an electrode compound) including a positive electrode active material, a binder, a conductive material, and the like in a solvent to form a slurry, applying the slurry on both surfaces of the first substrate 11, and then drying and compressing the applied slurry.

The first active material layer 13 may include the positive electrode active material, and the positive electrode active material may be a compound (a lithiated intercalation compound) capable of reversible intercalation and deintercalation of lithium.

An example of the positive electrode active material may be a compound expressed by any of the following formulas:

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂(0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2);

and

LiₐFePO₄ (0.90 ≤ a ≤ 1.8).

In the above formulas, A may be selected from among Ni, Co, Mn, or a combination thereof. X may be selected from among Al, Ni, Co, Mn, Cr, Fe, Mg, Sr, V, a rare earth element, or a combination thereof. D may be selected from among O, F, S, P, or a combination thereof. E may be selected from among Co, Mn, or a combination thereof. T may be selected from among F, S, P, or a combination thereof. G may be selected from among Al, Cr, Mn, Fe, Mg, La, Ce, Sr, V, or a combination thereof. Q may be selected from among Ti, Mo, Mn, or a combination thereof. Z may be selected from among Cr, V, Fe, Sc, Y, or a combination thereof, and J may be selected from among V, Cr, Mn, Co, Ni, Cu, or a combination thereof.

A coating layer on a surface of the compound may be used, or a mixture of the compound and the compound that has the coating layer may be used for the first active material layer 13. The coating layer may include at least one coating element compound selected from among an oxide of a coating element, a hydroxide of the coating element, an oxyhydroxide of the coating element, an oxycarbonate of the coating element, and a hydroxycarbonate of the coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a combination thereof. A process of forming the coating layer may use a method (a spray coating method, a dipping method, or the like) that does not adversely affect an active material property of the active material layer.

An example of the positive electrode active material may include a positive electrode active material represented by Chemical Formula A1 below:

[Chemical Formula A1] Liₐ₁₁Niₓ₁₁M¹¹_{y11}M¹²_{1-x11-y12}O₂

In Chemical Formula A1, 0.9≤a11≤1.8, 0.3≤x11≤1, and 0≤y11≤0.7, and each of M¹¹ and M¹² may independently be selected from Al, B, Ce, Co, Cr, F, Mg, Mn, Mo, Nb, P, S, Si, Sr, Ti, V, W, Zr, or a combination thereof, for example.

In Chemical Formula A1, 0.4≤x11≤1 and 0≤y11≤0.6, 0.5≤x11≤1 and 0≤y11≤0.5, 0.6≤x11≤1 and 0≤y11≤0.4, 0.7≤x11≤1 and 0≤y11≤0.3, 0.8≤x11≤1 and 0≤y11≤0.2, or 0.9≤x11≤1 and 0≤y11≤0.1, for example.

A specific example of the positive electrode active material may include lithium nickel cobalt composite oxide represented by Chemical Formula A2 below.

[Chemical Formula A2] Liₐ₁₂Niₓ₁₂Co_{y12}M¹³_{1-x12-y12}O₂

In Chemical Formula A2, 0.9≤a12≤1.8, 0.3≤x12<1, and 0<y12≤0.7, and M¹³ may be selected from Al, B, Ce, Cr, F, Mg, Mn, Mo, Nb, P, S, Si, Sr, Ti, V, W, Zr, or a combination thereof, for example.

In Chemical Formula A2, 0.3≤x12≤0.99 and 0.01≤y12≤0.7, 0.4≤x12≤0.99 and 0.01≤y12≤0.6, 0.5≤x12≤0.99 and 0.01≤y12≤0.5, 0.6≤x12≤0.99 and 0.01≤y12≤0.4, 0.7≤x12≤0.99 and 0.01≤y12≤0.3, 0.8≤x12≤0.99 and 0.01≤y12≤0.2, or 0.9≤x12≤0.99 and 0.01≤y12≤0.1, for example.

A specific example of the positive electrode active material may include lithium nickel cobalt composite oxide represented by Chemical Formula A3 below.

[Chemical Formula A3] Liₐ₁₃Niₓ₁₃Co_{y13}M¹⁴_{z13}M¹⁵_{1-x13-y13-z13}O₂

In Chemical Formula A3, 0.9≤a13≤1.8, 0.3≤x13≤0.98, 0.01≤y13≤0.69, and 0.01≤z13≤0.69, M¹⁴ may be selected from Al, Mn, or a combination thereof, and M¹⁵ may be selected from B, Ce, Cr, F, Mg, Mo, Nb, P, S, Si, Sr, Ti, V, W, Zr, or a combination thereof, for example.

In Chemical Formula A3, 0.4≤x13≤0.98, 0.01≤y13≤0.59, and 0.01≤z13≤0.59, 0.5≤x13≤0.98, 0.01≤y13≤0.49, and 0.01≤z13≤0.49, 0.6≤x13≤0.98, 0.01≤y13≤0.39, and 0.01≤z13≤0.39, 0.7≤x13≤0.98, 0.01≤y13≤0.29, and 0.01≤z13≤0.29, 0.8≤x13≤0.98, 0.01≤y13≤0.19, and 0.01≤z13≤0.19, or 0.9≤x13≤0.98, 0.01≤y13≤0.09, and 0.01≤z13≤0.09, for example.

The first active material layer 13 may include the positive electrode active material, and may further include a binder and/or a conductive material. In some embodiments, a content of the positive electrode active material may be 90 wt% to 98 wt% or 90 wt% to 95 wt% based on an entire weight of the positive electrode active material layer. A content of each of the binder and the conductive material may be 1 wt% to 5 wt% based on the entire weight of the positive electrode active material layer.

The binder may attach positive electrode active material particles to each other, may attach the positive electrode active material to the functional layer or the first substrate 11, and may be the same as the binder that constitutes the first functional layer 12.

The conductive material may be used to provide conductivity to the electrode, and may be the same as the conductive material constituting the first functional layer 12.

For example, end portions of the first functional layer 12 and the first active material layer 13 and an end portion of the second functional layer 15 may be covered with a first finishing tape 71. In some embodiments, the end portions may include cut surfaces of the first functional layer 12, the first active material layer 13, and the second functional layer 15, and a portion of an upper surface connected to the cut surface.

The first finishing tape 71 may extend from the end portion of the first active material layer 13 to cover and protect the end portion of the second functional layer 15. Accordingly, the finishing tape 71 may be attached to an upper surface of the first substrate 11 exposed between the end portion of the first active material layer 13 and the end portion of the second functional layer 15.

A second finishing tape 72 may be attached to the end portions of the first functional layer 12 and the first active material layer 13 formed on the rear surface B of the substrate 11. The second finishing tape 72 may reduce a step difference between the first substrate 11 and the first functional layer 12 and the first active material layer 13 due to thicknesses of the first functional layer 12 and the first active material layer 13. The step difference between the first functional layer 12 and the first active material layer 13 and the first substrate 11 may be reduced so that the step difference is gradually reduced like a stair.

A third finishing tape 73 may be attached to the first rear end electrode uncoated portion LA22, and the third finishing tape 73 may overlap an edge of the second finishing tape 72. The third finishing tape 73 may be formed at a region corresponding to the second functional layer 15, and may prevent the first electrode uncoated portion LA2 and the second electrode uncoated portion LB2 of the second electrode from being short-circuited together with the second functional layer 15.

The third finishing tape 73 may be formed to have a size of 1% to 20% with respect to an area of the first active material layer 13, and may be formed to have an area of 30% to 60% with respect to an area of the second functional layer 15.

In some embodiments, the second functional layer 15 may be formed on one surface of the first substrate 11 and the third finishing tape 73 may be attached to the other surface of the first substrate 11, so that even if the second functional layer 15 is broken when a cell is expanded, the third finishing tape 73 may be stretched, and may prevent the first electrode 121 and the second electrode 122 from being short-circuited.

For example, end portions of the first electrode tab 14, the first functional layer 12, and the first active material layer 13 may be covered and protected with a fourth finishing tape 74, and the fourth finishing tape 74 may reduce a step difference between the first electrode tab 14, the first functional layer 12, and the first active material layer 13, and may prevent the first electrode and the second electrode from being short-circuited.

Referring to FIG. 2 and FIG. 4, the second electrode active portion LB1 may include a second substrate 21 and a second active material layer 22 formed on at least one surface of the second substrate 21.

The second electrode uncoated portion LB2 may include a second front end electrode uncoated portion LB21 and a second rear end electrode uncoated portion LB22 disposed at a front end portion and a rear end portion of the second electrode 122, respectively. A separate active material layer may not be formed on the second substrate 21 of the second front end electrode uncoated portion LB21 and the second rear end electrode uncoated portion LB22 so that a surface of the second substrate 21 is exposed. A second electrode tab 23 for drawing an electric current to the outside may be connected on the second substrate 21 of the second electrode uncoated portion LB2 disposed at the front end portion and the rear end portion.

The second electrode tab 23 may be connected to the second electrode uncoated portion LB2 by an ultrasonic welding method, a laser welding method, or a resistance welding method, and may protrude out of the second electrode uncoated portion LB2. The second electrode tab 23 may be made of nickel.

A protective tape 70 for protecting the second electrode tab 23 may be attached on the second electrode tab 23. Protective tapes 70 may be formed on both surfaces around the second substrate 21.

For example, a short-circuit prevention tape 75 may be further formed at a portion of the second front end electrode uncoated portion LB21 corresponding to the first electrode uncoated portion LA2 in order to prevent a short circuit from occurring by overlapping the first electrode uncoated portion LA2.

The second substrate 21 may provide a moving path of an electric charge generated in the second active material layer 22, and may support the second active material layer 22.

The second electrode 122 may be a negative electrode, and the second substrate 21 may be a metal thin plate with excellent conductivity. For example, the second substrate 21 may be a copper foil or a nickel foil, or may have a mesh structure. The second active material layer 22 may be formed by dispersing an electrode mixture (or an electrode compound) including a negative electrode active material, a binder, a conductive material, and the like in a solvent to form a slurry, applying the slurry on at least one surface of the second substrate 21, and then drying and compressing the applied slurry.

A material capable of reversible intercalation and deintercalation of a lithium ion, a lithium metal, an alloy of the lithium metal, a material capable of doping and dedoping lithium, or transition metal oxide may be used as the negative electrode active material of the second active material layer 22.

For example, the material capable of reversible intercalation and deintercalation of the lithium ion may be a carbon material that is a carbon-based negative electrode active material generally used in a lithium rechargeable battery. Crystalline carbon, amorphous carbon, or a combination thereof may be used as a representative example of the carbon-based negative electrode active material. An example of the crystalline carbon may include graphite such as artificial graphite or natural graphite having a shape such as an amorphous shape, a plate shape, a flake shape, a spherical shape, or a fibrous shape, and an example of the amorphous carbon may include soft carbon, hard carbon, mesophase pitch carbide, fired cokes, or the like.

An alloy of lithium and a metal selected from among Na, K, Rb, Cs, Fr, Be, Mg, Ca, Sr, Si, Sb, Pb, In, Zn, Ba, Ra, Ge, Al, and Sn may be used as the alloy of the lithium metal.

The material capable of doping and dedoping lithium may include Si, SiOₓ (0 < x < 2), a Si-Q alloy (wherein Q is an element selected from the group consisting of an alkali metal, an alkaline-earth metal, a Group 13 element, a Group 14 element, a Group 15 element, a Group 16 element, a transition metal, a rare earth element, and a combination thereof, and not Si), a Si-carbon composite, Sn, SnO₂, a Sn-R alloy (wherein R is an element selected from the group consisting of an alkali metal, an alkaline-earth metal, a Group 13 element, a Group 14 element, a Group 15 element, a Group 16 element, a transition metal, a rare earth element, and a combination thereof, and not Sn), a Sn-carbon composite, or the like. At least one of the foregoing materials may be mixed with SiO₂. The elements Q and R may be used to be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, or a combination thereof.

Lithium titanium oxide may be used as the transition metal oxide.

Referring back to FIG. 1 and FIG. 2, the separator 123 may be disposed between the first electrode 121 and the second electrode 122 to prevent a short circuit between the first electrode 121 and the second electrode 122.

The separator 123 may be formed of a porous film with high ion permeability and mechanical strength. For example, the separator 123 may be formed of an olefin-based polymer such as polyethylene, polypropylene, or the like. The separator 123 may extend more than the first electrode active portion LA1 or the second electrode active portion LB1 along a length direction or a width direction to prevent a short circuit between the first electrode active portion LA1 and the second electrode active portion LB1 due to thermal contraction.

The electrode assembly 100 may be included in a pouch-type case 200 together with an electrolyte. The pouch-type case 200 may be formed of a laminate exterior material, and for example, the laminate exterior material may be formed of a multi-layer structure having a first insulating layer 2, a metal layer 3, and a second insulating layer 4. For example, various adhesive layers or functional layers may be further added in the multi-layer structure.

The first insulating layer 2 may be formed of a material with an insulation property and thermal adhesiveness on an inner surface of the laminate exterior material, so that an edge of the exterior material is thermally welded to seal the pouch in a state in which the electrode assembly 100 is accommodated. For example, the first insulating layer 2 may be formed on one surface of the metal layer 3, and may form the inner surface of the laminate exterior material facing the electrode assembly 100. The first insulating layer 2 may be formed of casted polypropylene (CPP) or its equivalent that does not react with the electrolyte.

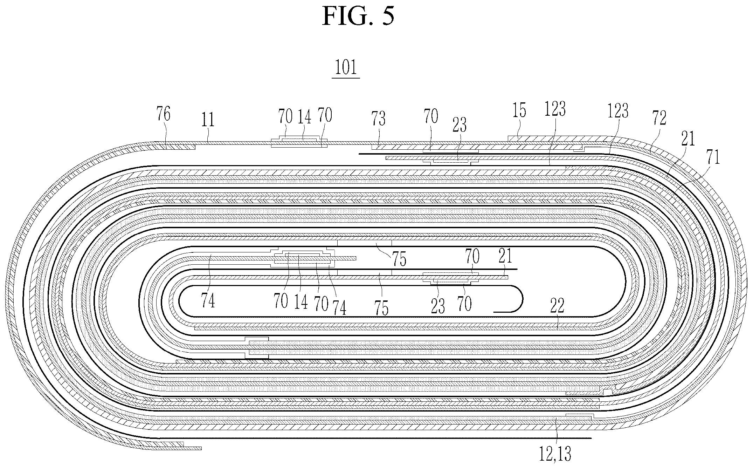

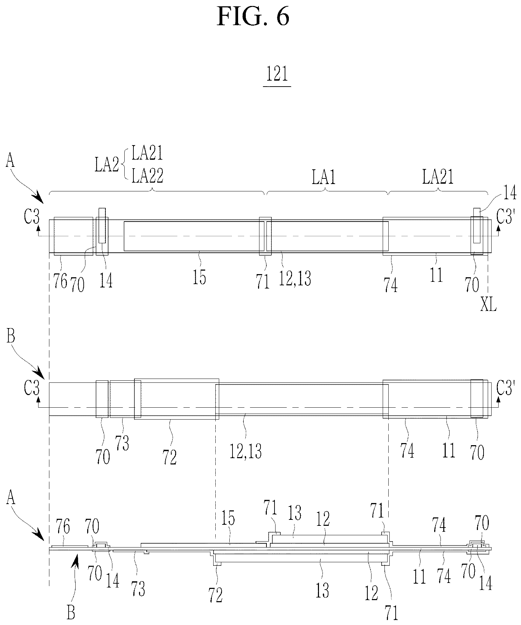

FIG. 5 is a schematic cross-sectional view of an electrode assembly 101 according to one or more embodiments of the present disclosure, and FIG. 6 is a view of aspects of a first electrode 121 of the electrode assembly 101 of FIG. 5.

FIG. 6 is a view sequentially showing a front plan view, a rear plan view, and FIG. 5 is a cross-sectional view cut along a line C3-C3' of the first electrode 121 of the electrode assembly 101 (indicated in FIG. 6).

Because the electrode assembly 101 of FIG. 5 and FIG. 6 is mostly the same as the electrode assembly 100 of FIG. 1, only differences in the embodiments related to FIGs. 1-4 and the embodiments related to FIGs. 5 and 6 are detailed.

The electrode assembly 101 of FIG. 5 and FIG. 6 may include a first electrode 121, a second electrode 122, and a separator 123 disposed between the first electrode 121 and the second electrode 122.

The electrode assembly 101 may be wound and then pressurized to include a pair of flat portions and a pair of curved portions.

The first electrode 121 may include a first substrate 11, a first functional layer 12 and a first active material layer 13 formed above both surfaces of the first substrate 11, a first electrode tab 14 formed at a first electrode uncoated portion LA2 of the first substrate 11, and a protective tape 70 covering and protecting the first electrode tab 14.

A second functional layer 15 may be formed on a front surface A of the first substrate 11. An end portion of the second functional layer 15 and the other end portion of the first functional layer 12 and the other end portion of the first active material layer 13 may be covered and protected with a first finishing tape 71. A second finishing tape 72 may be attached to a rear surface B of the first substrate 11 at a first rear end electrode uncoated portion LA22.

The first electrode 121 of FIG. 5 and FIG. 6 may further include a fifth finishing tape 76 attached on the first substrate 11 that is not included in the embodiments discussed with reference to FIGs. 1-4.

The fifth finishing tape 76 may be formed between the first electrode tab 14 and an end of the first substrate 11, and may be disposed at the curved portion of the electrode assembly 101.

If the fifth finishing tape 76 is formed, according to some embodiments, an area in which the first substrate 11 is exposed at the first electrode uncoated portion LA2 may be minimized.. As a result, the first electrode 121 may be further prevented from being short-circuited with the second electrode 122.

It is to be understood that the disclosure is not limited to only the embodiments detailed herein, but is also intended to cover various modifications and equivalent arrangements included within the present disclosure and the equivalent scope of the appended claims.

## Claims

1. A winding-type electrode assembly, comprising:
a first electrode;
a separator; and
a second electrode, wherein the first electrode comprises:
a first substrate,
a first active material layer including a first front surface active material layer and a first rear surface active material layer respectively formed on a front surface and a rear surface of the first substrate, and
a functional layer formed on the rear surface of the first substrate,
a first finishing tape covering an end portion of the rear surface first active material layer and one end portion of the functional layer,
a second finishing tape covering an end portion of the first front surface active material layer, and
a third finishing tape covering an end portion of the second finishing tape, wherein
another end portion of the functional layer overlaps the third finishing tape.

2. The winding-type electrode assembly of claim 1, wherein
the first substrate includes a first electrode active portion where the first active material layer is formed and a first electrode uncoated portion where the first active material layer is not formed so that the first substrate is exposed, and
the first electrode further includes a first electrode tab formed on the first substrate of the first electrode uncoated portion.

3. The winding-type electrode assembly of claim 2, wherein the first electrode further includes a fourth finishing tape formed on the first substrate between an end portion of the first substrate adjacent to the third finishing tape and the first electrode tab.

4. The winding-type electrode assembly of claim 3, wherein
the winding-type electrode assembly is wound and then pressurized to have an oval shape that includes a pair of flat portions and a pair of curved portions, and
the fourth finishing tape covers any one of the curved portions.

5. The winding-type electrode assembly of claim 2, 3 or 4, wherein the first electrode further comprises a protective tape formed on the first electrode tab, and
a fifth finishing tape covering the protective tape and an end portion of the first active material layer.

6. The winding-type electrode assembly of any preceding claim, wherein the functional layer includes a ceramic material.

7. The winding-type electrode assembly of any preceding claim, wherein
the first electrode further comprises a first functional layer disposed between the first front surface active material layer and the first substrate, and
the functional layer corresponds to a second functional layer.

8. The winding-type electrode assembly of claim 7, wherein the first functional layer includes a material including a compound represented by Chemical Formula 1, a compound represented by Chemical Formula 2, or a combination thereof, wherein
Chemical Formula 1 is given by Liₐ₁M¹ₓ₁Fe₍₁₋ₓ₁₎PO₄ where 0.90≤a1≤1.5, 0≤x1≤0.4, and M¹ is Mg, Co, Ni, or a combination thereof, and
Chemical Formula 2 is given by Liₐ₂Mnₓ₂Fe₍₁₋ₓ₂₎PO₄ where 0.90 ≤ a2 ≤1.5 and 0.1 ≤ x2 ≤1.

9. A rechargeable battery comprising:
the electrode assembly of any one of claims 1 to 8; and
a case that accommodates the electrode assembly and an electrolyte.

10. A method of manufacturing a winding-type electrode assembly, the method comprising:
disposing a separator between a first electrode and a second electrode, wherein the first electrode comprises:
a first substrate,
a first active material layer including a first front surface active material layer and a first rear surface active material layer respectively formed on a front surface and a rear surface of the first substrate, and
a functional layer formed on the rear surface of the first substrate,
covering an end portion of the rear surface first active material layer and one end portion of the functional layer with a first finishing tape,
covering an end portion of the first front surface active material layer with a second finishing tape, and
covering an end portion of the second finishing tape with a third finishing tape, wherein another end portion of the functional layer overlaps the third finishing tape.
